Europäisches Patentamt

European Patent Office

Office européen des brevets

(19)

(11) **EP 1 155 569 B1**

(12) **EUROPEAN PATENT SPECIFICATION**

(45) Date of publication and mention
of the grant of the patent:
**15.09.2004 Bulletin 2004/38**

(51) Int Cl.7: **H04N 5/913**

(86) International application number:
**PCT/US2000/004835**

(21) Application number: **00911979.3**

(22) Date of filing: **25.02.2000**

(87) International publication number:
**WO 2000/051348 (31.08.2000 Gazette 2000/35)**

(54) **Controlling copying of a video signal employing a watermark and associated data**

Kontrolle des Kopierens eines Videosignals mittels Wasserzeichen und damit in Beziehung stehender Zusatzdaten

Contrôle de duplication d'un signal vidéo, utilisant un filigrane et des données associées

(84) Designated Contracting States:
**AT BE CH CY DE DK ES FI FR GB GR IE IT LI LU MC NL PT SE**

(30) Priority: **25.02.1999 US 121806 P**
**16.02.2000 US 505621**

(43) Date of publication of application:
**21.11.2001 Bulletin 2001/47**

(60) Divisional application:
**03007089.0 / 1 335 595**

(73) Proprietor: **Macrovision Corporation**
**Santa Clara, CA 95050 (US)**

(72) Inventors:
• **HOLLAR, Mark, A.**
**Palo Alto, CA 94306 (US)**
• **WONFOR, Peter**
**El Granada, CA 94018 (US)**

(74) Representative: **Needle, Jacqueline et al**
**W.H. BECK, GREENER & CO**
**7 Stone Buildings**
**Lincoln's Inn**
**London WC2A 3SZ (GB)**

(56) References cited:
EP-A- 0 860 997          EP-A- 0 903 736
WO-A-85/02293          WO-A-97/13248
WO-A-99/11064          US-A- 5 530 759

## Description

The present invention relates to methods and apparatus for controlling copying of a video signal.

Some methods of controlling copying, or preventing serial copying, of video material with a video watermark rely upon a recording device to add a second watermark to the video image. Watermarks are well known in the digital video field. Watermarks are signals embedded in an otherwise conventional video or audio signal that provide a unique identifier and thus discourage or prevent unauthorized copying or use. The watermark is not apparent to a person viewing the watermarked signal, but is readily detected by appropriate circuitry.

Preventing or controlling copying is useful to prevent copyright infringement, and prevent distribution of unauthorized copies. In a "generational" control system where there is a one-copy-allowed state and a no-more-copies-allowed state, the combination of first and second watermarks define the no-more-copies-allowed state while the original watermark defines the one-copy-allowed state. (Copying here refers to use of a video tape recorder or video disc recorder, for instance). In a television system with a digital cable television or direct broadcast satellite set top box (STB), this type of system prevents serial copying of video content, since the compliant recorder makes the appropriate state change from one-copy-allowed to no-more-copies during the record process. However, it does not easily allow for a pay-to-record feature since records are generally not provided with back channel and communication mechanisms for reporting purchase choices to an accounting system.

To implement a pay-to-record feature, the STB needs to control the state change rather than the recorder controlling the state change. The pay-to-record feature thus allows a STB to output video under conditional access control with three possible payments by the viewer: No payment: the consumer (viewer) is not allowed to view or record the content; One level of payment: the consumer is allowed to view the content, but is not allowed to record it; Different (higher) payment: the consumer can both view and record the content. While it is possible to use the STB to introduce the second watermark, there are "legacy" issues that prevent widespread adoption of such a system. Specifically, there is a large installed base of STBs which do not incorporate the required features to allow this second watermark to be added. If a copy control system were introduced which used such a second watermark for copy control in STBs, then the existing consumers with STBs without this feature would be disenfranchised; those consumers would be unable to make copies at all.

An alternative method of providing these copy control features uses a "ticket". A ticket here is a cryptographic counter (number, usually in binary form) which is carried in a communications channel associated with the video. This ticket uses one-way cryptographic features to maintain a play and record history. One way functions are well known to those versed in the cryptographic field and include a class of transforms with the property that the function is relatively easy to compute but significantly harder to undo or reverse. In other words, given x it is easy to calculate f(x), however, given f(x) it is difficult to compute x.

A recorder detecting the one-copy-allowed state's watermark must then detect the correct ticket prior to allowing a recording to be made. To convey the ticket from the STB to the recorder, the vertical blanking interval (VBI) of the video signal can be used as a communications channel. However, this has the disadvantage that some broadcast MPEG encoders (video compression devices) do not transmit the entire VBI. Alternatively, the ticket is inserted in the active picture area, such that it is in the overscan area of older TV's. However, this has the disadvantage that this data may be seen by the viewer on newer TV's (having less overscan) and thus may be deemed objectionable by the consumer.

Yet another method of conveying the ticket is to activate and de-activate a subset of the analog anti-copy protection system signals to convey a bitstream. (Analog anti-copying protection signals here refer, e.g., to the Macrovision Corp. video copy protection processes which are commercially available; also see, e.g., Ryan US Patent 4,601,603). This has the advantage that existing digital recorders such as those of the DVCAM type automatically delete this form of a ticket, since they fail to record the VBI. However, to accomplish the appropriate control out of the STB requires changes to the STB's internal software. In some cases, this software can be downloaded to existing STBs over the air or cable. In this manner the encoder IC (integrated circuit) which generates the Macrovision Corp. analog copy protection pulses can react appropriately. However, in other cases the internal software has been installed permanently in the STB and cannot be modified.

All these methods of transmitting a ticket require modification to the cable-TV/satellite system head end control software to provide a way to introduce the ticket into the video. This modification could undesirably be quite expensive to the cable-TV or satellite system operator.

WO-A-8502293 describes an antipiracy device which includes a detection member for detecting a mark signal inscribed on a sound track of a video tape, which may not be eliminated during a duplication, a detection member for detecting at least one digitally coded message also inscribed in the sound track, a retrieval member for retrieving the coded message, and means for enabling or inhibiting the exploitation of the tape by a television receiver as a function of the marking signal and the coded message.

EP-A-0860997 describes a digital data encode system including a field judging unit dividing the digital data signals by a predetermined reference, a watermark data selection output unit for selecting one of a plurality of different watermark data in response to the field judging unit, and a watermark inserting device for inserting watermark data supplied from the watermark data selection output unit into digital data signals.

WO-A-9713248 describes a method of controlling copying a video signal in which a watermark is embedded in a supplied video signal; and associated data is provided in a predetermined location of the video signal.

EP-A-0903736 describes a copy generation management system (CGMS) in which a watermark and a CGMS signal are embedded into a video signal. The watermark and the CGMS signal have a rational relation.

WO-A-99/11064 describes a method of controlling copying of a video signal, comprising the steps of: embedding a watermark in a supplied video signal; and providing associated data in the video signal, wherein the associated data is related to the watermark in a predetermined manner.

WO-A-98/33325 describes a method of controlling copying of a video signal, comprising the steps of: embedding a watermark in a supplied video signal; and providing associated data in the video signal, wherein the associated data is related to the watermark in a predetermined manner, and wherein the associated data is in the vertical blanking interval of the video signal.

The invention seeks to provide alternative methods for copy protection.

According to a first aspect of the present invention a method as defined above is characterised in that the associated data is on a predetermined video line in the vertical blanking interval of the video signal, said predetermined video line being a line used to carry parental blocking data.

Embodiments of the invention may be used together with consumer controllable information in a television (or audio only) STB to provide pay-to-tape (or pay-to-record generally) control. One embodiment uses the existing video line 21 (in NTSC-TV) extended data service or closed caption protocol to hold a ticket (cryptographic value), and a video watermark, to jointly control copying of video being provided by a STB. This may be done in such a manner to enable additional features, such as pay-to-tape or pay-to-record, even in systems with prior art (legacy) STBs. In addition, this approach has the advantage that existing cable-TV or satellite system head end MPEG (compression) encoders can already transmit this type of information. Hence minimum changes are required to the system operator's infrastructure.

Preferably, the associated data is a cryptographic value. For example, the cryptographic value is a hash function of a seed, and the watermark is the hash function of the hash function of the hash function of the seed.

Preferably, said predetermined video line is a line also used to carry closed caption data. For example, said predetermined location, for NTSC-TV, may be video line 21.

The present invention also extends to apparatus for processing an input video signal to control subsequent copying thereof, the apparatus comprising: a seed generator; a hash function generator coupled to receive a seed from the seed generator and to output resulting data; a watermark generator coupled to receive the seed and to generate a watermark from the seed, and to embed the watermark in a picture portion of the input video signal; and a transmission channel coupled to transmit the output resulting data and the watermarked video to a receiver, the output resulting data being transmitted on a predetermined video line in the vertical blanking interval of the video signal, said predetermined video line being a line used to carry parental blocking data.

According to a further aspect of the present invention there is provided a method of controlling copying of a video signal having an embedded watermark and associated data, the associated data being on a predetermined video line in the vertical blanking interval of the video signal, said predetermined video line being a line used to carry parental blocking data, the method comprising the steps of: determining if recording of the video is to be permitted; only if recording is permitted, transmitting the video signal together with the associated data to a recording device, and enabling recording by the recording device only if the embedded watermark has a predetermined relationship to the associated data.

In an embodiment, recording is enabled by the recording device of the watermark and the associated data match.

The invention also extends to a set top box for connection to a television receiver, comprising: an input terminal arranged to receive a video signal including a watermark and to receive associated data, wherein the associated data is on a predetermined video line in the vertical blanking interval of the video signal, and said predetermined video line is a line used to carry parental blocking data, conditional access control means, having a control terminal for receiving a user selection for enabling recording of the video signal; and a combiner having a control terminal coupled to an output terminal of the conditional access control means and receiving the video signal from the input terminal, and having an output terminal, wherein the combiner outputs the video signal with the associated data where recording is permitted only if the associated data is related to the watermark in a predetermined manner.

In an embodiment, the set top box is coupled to a video recorder such that the video recorder receives the output video signal, and wherein the video recorder comprises means to compare the embedded watermark with the associated data and to enable recording only if the watermark has the predetermined relationship to the associated data.

According to a further aspect of the present invention there is provided a method of operating a video recorder, comprising the steps of: receiving an input video signal having an embedded watermark and associated data, the associated data being on a predetermined video line in the vertical blanking interval of the input video signal, and said predetermined video line being a line used to carry parental blocking data, detecting the watermark; detecting the associated data; subjecting the associated data to a predetermined compression function; and allowing recording of the input video signal only if the detected watermark matches the result of the compression function.

According to a still further aspect of the present invention there is provided a video recorder, comprising: an interface to a recording medium; an input port for receiving a video signal to be recorded on the medium; a watermark detector coupled to the input port to detect a watermark in said video signal; a data detector coupled to the input port to detect data on a predetermined video line in the vertical blanking interval of the video signal, said predetermined video line being a line used to carry parental blocking data; and a processor arranged to compare the detected watermark with the result of a compression function applied to said data, and to enable recording of the video signal onto the medium only if the comparison is a match.

The present invention also extends to a method of controlling the playing of a video signal recorded on a medium, comprising the steps of: playing the video signal from the medium; detecting a watermark in the video signal; detecting data associated with the video signal, the data being on a predetermined video line in the vertical blanking interval of the video signal, and said predetermined video line being a line used to carry parental blocking data; subjecting the data to a compression function; and allowing further playing of the video signal only if the watermark matches the compression function of the data.

In accordance with another aspect of the present invention there is provided a video player comprising: an interface for receiving a video signal from a recording medium; a watermark detector arranged to receive the video signal; a data detector arranged to detect data associated with the video signal, wherein the associated data is on a predetermined video line in the vertical blanking interval of the video signal, and said predetermined video line is a line used to carry parental blocking data; and a processor coupled to the watermark detector and the data detector and arranged to determine if there is a predetermined relationship between a detected watermark and the associated data to allow further playing only if there is said predetermined relationship.

Embodiments of the present invention will hereinafter be described, by way of example, with reference to the accompanying drawings, in which:

Figure 1A shows a block diagram of a system in accordance with the invention; Figure 1B shows detail of Figure 1A; Figure 1C shows a variant of Figure 1A; Figure 1D shows a variant of Figure 1C;
Figure 2 shows an embodiment of a DVD player;
Figure 3 shows a video recorder for the Figure 1A system;
Figure 4 shows a block diagram of a system which is not an embodiment of this invention;
Figure 5 shows a video recorder for the Figure 4 system;
Figure 6A shows the system of Figure 1;
Figure 6B shows a combination STB and recorder;
Figure 7 shows a system as Figure 4 modified for audio; and
Figure 8 shows an audio recorder for the Figure 7 system.

The system described, in one embodiment, utilizes the existing infrastructure and legal advantage given to video line 21 (in the VBI in NTSC-TV) data and combines it with video watermarks to generate revenue by allowing controlled copying of video signals. Video line 21 (in NTSC-TV, which is the US television standard) currently is used to carry closed caption data and parental blocking (V-chip) data in accordance with two significant standards: ANSI/EIA-608 and ANSI/EIA-744. (Other television standards have similar features and may be used similarly). In particular, various U.S. laws require television sets sold in the U.S. to react to data carried by line 21 and require the data on line 21 to be preserved during transmission through various paths. In addition, U.S. FCC rules derived from the U. S. Telecommunications Act of 1996 also require TV receivers or PC's (personal computers) with video tuner cards, and with displays greater then 13" in size, to provide parental blocking (V-Chip control).

The legal requirement (in the U.S., at least) to provide parental blocking ensures that PC's (personal computers), as a potential class of storage/recording device, must recognize video line 21 data. Without this legal requirement, PC's might make that bandwidth/capacity available for other functions. As described in EIA-608, field 1, line 21 is allowed only to have closed captioning or the original picture content. (TV pictures have two fields per frame.) No other data services are allowed here. Field 2, line 21 may however have closed captioning, parental blocking or other extended data services. The protocol provided with extended data services is flexible enough that the protocol can accommodate a ticket (or other associated data) as described above.

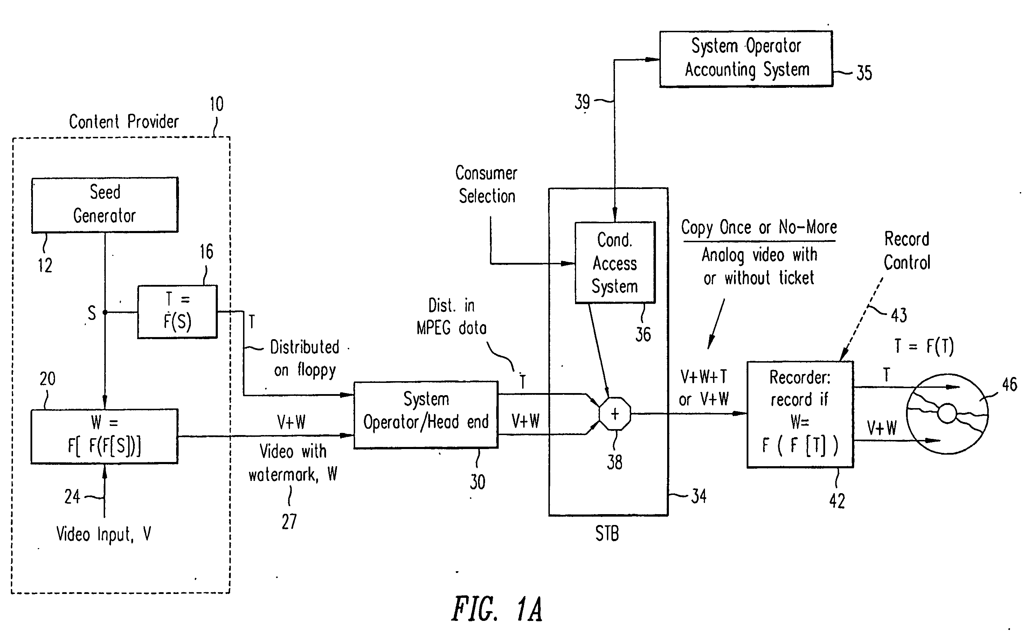

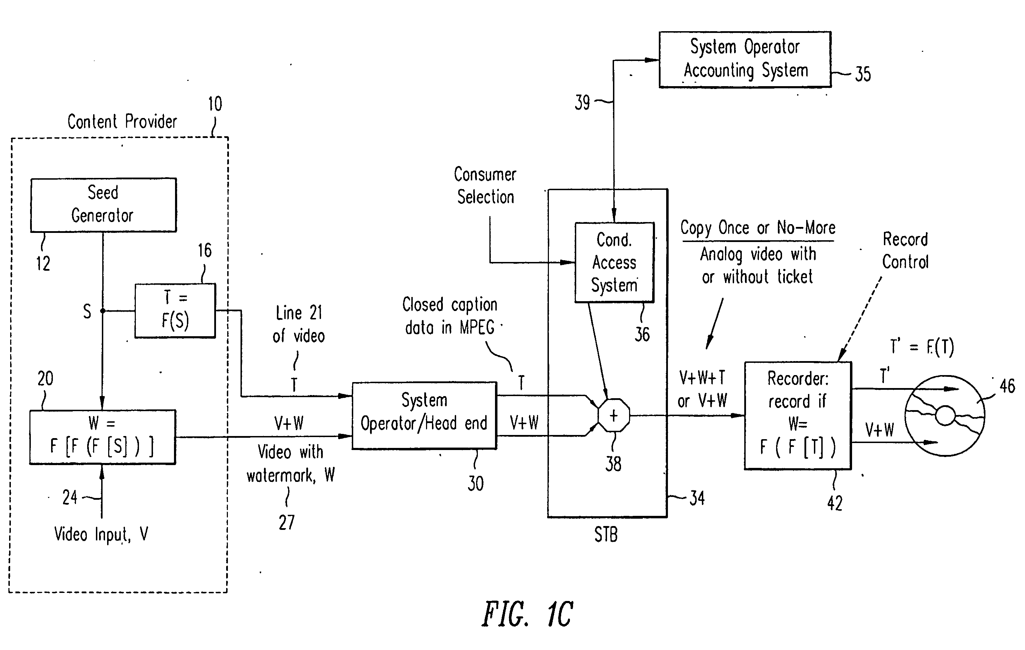

To follow the path of the ticket as shown in Figure 1A, at the time of content (program) preparation by the content provider 10, a seed (number) S is generated by a seed generator 12. (This is, e.g., a random number generator.) This seed S is then subject to a fixed and secure one-way hash function F by hash function element 16. This is a one-way hash (compression) function of the type well known in the cryptographic field to determine the original ticket T. The system operator cannot reliably be known to be a trusted party; as such, making the seed accessible to him has the potential to weaken the system security. Hence in this embodiment the content provider, not the system operator, does this. In addition, the seed S is provided to the watermark embedder 20.

Note that this is a hybrid digital-analog TV system. Upstream of the STB 34, the signal is digital; the STB outputs an analog signal or optionally both a digital and analog form of the video signal. Signal transmission over other channels (e.g., the internet) is an alternative.

Each block in the figures represents a conventional integrated circuit or commercially available component (circuit or software) or product or such a conventional element modified as disclosed here; the nature of the connections therebetween as shown in the figures, and any necessary modification thereto, will be apparent to one skilled in the art in light of this disclosure. For instance, the content provider block 10 could be embodied in a suitably modified computer, with the seed, ticket and watermark generation carried out by software executed by the computer's central processing unit.

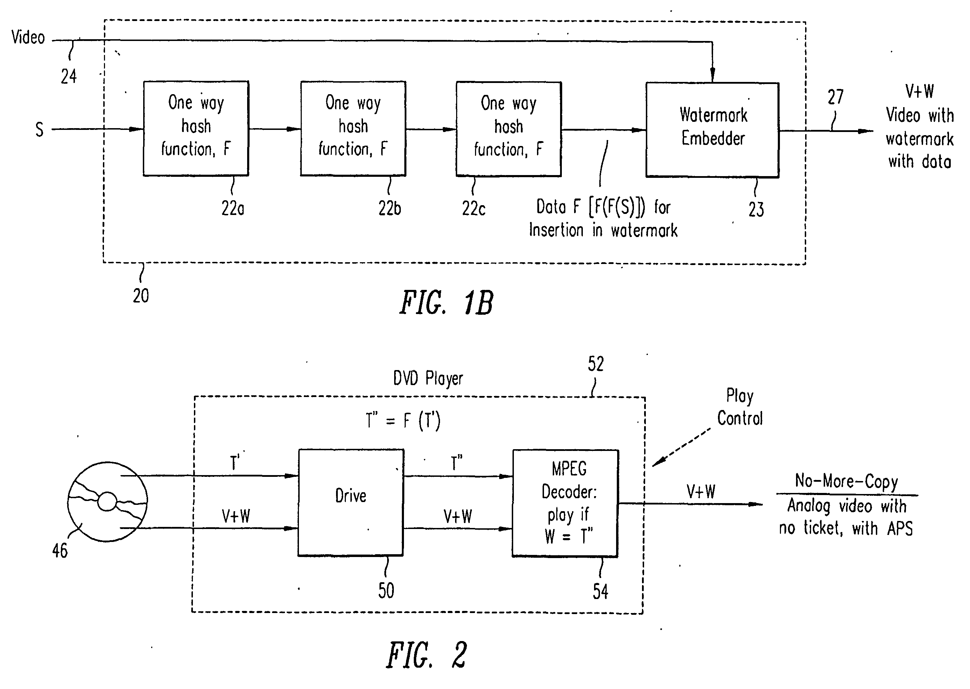

The watermark embedder 20 submits the seed S recursively to the function F three times, as shown in detail in Figure 1B, to generate a watermark W which is then conventionally added to (embedded in) the video signal V applied at video input port 24. As shown in Figure 1B, watermark embedder 20 includes the three one way hash function F blocks 22a, 22b, 22c and element 23, which inserts the resulting data $F[F(F(S))]$ as the watermark in the video. The output signal of embedder 23 is on line 27, also shown in Figure 1A. The watermark is added in a linear or non-linear fashion using any available watermarking technique. In some cases, to convey a sufficient number of bits to guarantee a ticket of appropriate cryptographic complexity, the ticket is transmitted as a series of characters varying over time. These digital communication methods for conveying m-bytes of data across an n-bit wide interface are well understood, and can use any available protocol, including, for instance, TCP/IP or PPP.

The video signal with the watermark V+W and the ticket T can be independently transmitted to the system (cable or satellite TV) operator/head end 30, or optionally the content provider can use a standard closed captioning encoder to embed the ticket T on, e.g., video line 21. (The distinction here between the content provider and system operator is arbitrary and only for purposes of illustration.) An example of a method of independent transmitting the ticket T to the system operator would be to provide it on a floppy disk. The system operator could then send it through the system as MPEG user data.

The line 21 method of distributing the ticket, as seen in Figure 1C, has the advantage that it allows the system operator to deploy the watermark/ticket addition system at its head end 30 with no changes to the remainder of its existing infrastructure. (Figure 1C is otherwise identical to Figure 1A.) In this second case, the (ticket T) data on line 21 of the video is extracted from the video signal and sent as MPEG data by the system's MPEG encoder. Without this, line 21 would be treated like video and would potentially be subject to the usual video compression artifacts, as transforms like the discrete cosine transform are applied, quantizations are made and bit rate reduction occurs. This undesirably would corrupt the ticket.

In Figure 1C, from the system operator's head end 30, the ticket T is conveyed as line 21 MPEG data in the MPEG stream's video elementary stream while the video with watermark V+W is sent as compressed picture data. The ticket T is provided to all STBs 34 via conventional broadcast and reception of the MPEG data stream.

Two classes of STBs 34 must be considered: legacy (old) STBs and new (upgraded) STBs. Legacy STBs are unable to have their internal microcontroller software upgraded. Thus they treat the ticket T on line 21 as standard closed caption, teletext or extended data. All of this information which is provided to the STB is output in the analog video signal as line 21 data.

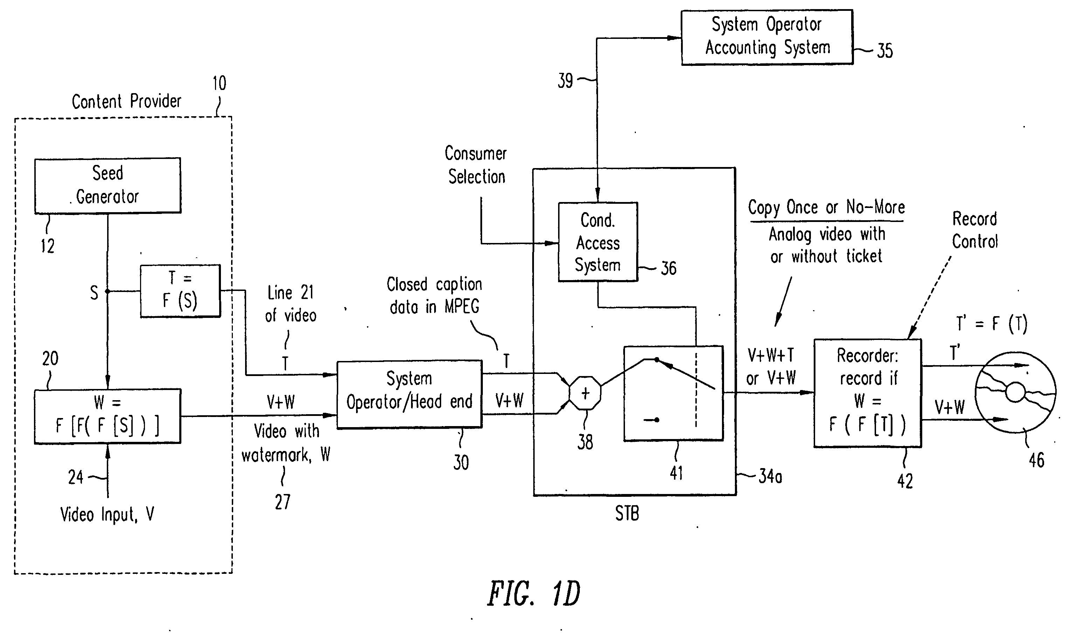

Consumers with legacy STBs are not inconvenienced or prevented from making a recording. This is a disadvantage from the content provider's standpoint, since he may in fact accrue less revenue as a result. However, television industry practice with respect to time shifting (video recording) may indicate that such consumers should not be disadvantaged. Thus the system as described here ensures that the consumer is in fact not disadvantaged and that legacy STBs provide the ticket on their video output. As shown in Figures 1A, 1C and 1D, the STB 34 outputs the video with the watermark with the ticket, V+W+T. In the case of Figure 1D, the ticket T is not controllable by the consumer due to the "legacy" design of the STB 34a. Here the only possible user control is pay-and-view or not-pay-and-not-view. This is controlled by the switch 41 shown in the STB 34a of Figure 1D.

New or upgraded STBs in accordance with this disclosure provide additional control to the consumer and also allow accrual of greater revenue for the system operator and lot content provider. In this case, the consumer can select whether he wishes to simply view the program or whether he wishes to view and record/store it. When he makes his selection through a standard interface with an onscreen display and remote control, the STBs conditional access (CA) sub-system 36 stores an indicator of the activity - view only or view and record - which the consumer selected.

This indicator is transmitted to the system operator via a conventional cable/satellite TV/internet return path 39 (Figures 1A, 1C) which includes, e.g., a telephone modem using the telephone lines or, in those cable TV systems which support it, a conventional cable plant return path. Return path 39 allows the system operator to charge the consumer for his selection. A report of the access is made to the conventional system operator accounting system 35 for consumer billing purposes, via return path 39.

After the conditional access sub-system 36 has stored the indication of the consumer's request, then the addition of the ticket T to the video occurs. If the content is only to be viewed, then the video is provided out of the STB 34 without the ticket: V+W. If the content is to be viewed and recorded, then the video is provided out of the STB 34 with the ticket: V+W+T. Adding the ticket T to the video V consists now of either introducing the ticket data T in the encoder IC (integrated circuit) in the STB 34 or alternatively in an ATSC RF remodulator integrated circuit located in STB 34. It is this encoder IC which outputs an analog video signal to the associated TV receiver (not shown) connected to STB 34 based on the input digital video signal. It is the RF remodulator which outputs an ATSC digital TV signal. In this case, the ticket T is controllable by the consumer via his STB 34.

In Figures 1A and 1C the recorder 42 now receives the analog video signal V+W or V+W+T. Video recorder 42 (portions of which are shown in detail in Figure 3) is mostly conventional but adapted as disclosed here to include the record control function 43. Ticket/line 21 data extractor 48 extracts the ticket T and submits it to circuitry (processor) 54, 56 which performs the one-way hash function F two times on ticket T. If the result of this hashing at 54, 56 matches, at comparator 57, the watermark W in the video signal detected by a watermark detector 50, then switch 58 is closed and recording by recorder 42 is allowed, i.e., recording is allowed when the following conditional logic statement is returned as being true:

$$W=F( \ F[T] \ )$$

As shown, switch 58 (when closed), controlled by comparator 57, couples the V+W signal extracted by the ticket/line 21 detector circuitry 52 to the output terminal of switch 58. This output signal V+W is then coupled to the actual recording part (not shown) of recorder 42, which is conventional.

The pay-to-record feature has now been implemented. If there is no ticket T detected by the record control 43 recorder 42, then this statement (comparison) is returned as no. This would be the case if the consumer had chosen to only view the content. If the wrong ticket T is accompanying the video, perhaps because a recording of the video signal has already been made, then again the statement is returned as false and the recording is not permitted. (Note that recorder 42 need not be a digital recorder.) When recording the video and ticket to the recorder media 46 (in this case the media is a disc as shown in Figure 1A), the ticket T is again subject to the function F to generate a new version of the ticket T'. In this case the cryptographic counter has been incremented: T' = F( T ).

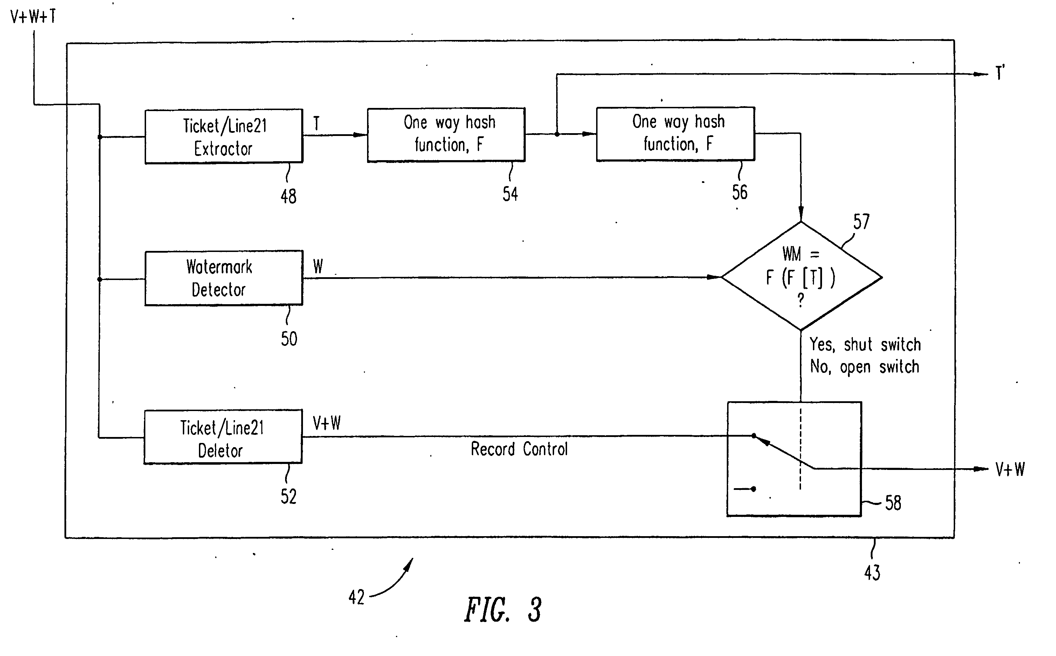

Later when playing back the video content from the recording media 46 as shown in Figure 2, circuitry associated with the drive 50 in the player 52 (e. g., a DVD player) again increments the ticket T by applying function F to it: T'' = F( T' ). The drive 50 performs this function, e.g., when a DVD player 52 is implemented as a drive in a personal computer with a software or hardware associated MPEG decoder. (Note that there is no requirement for a drive and rotating media; the media may be, e.g., semiconductor storage with appropriate access circuit circuitry.) In any case, there is conventionally an interface (the drive or semiconductor storage control circuitry) to the actual recording (storage) medium.

Then the drive (or appropriate circuitry) performs the ticket incrementing to enhance security. (The player 52 may be the recorder 42 of Figure 1A or a play only device.) Now at the MPEG decoder 54 in the player 52, the watermark W is again detected and checked against the current ticket T''. If a match is found, then playing is allowed and play control is implemented. In this case, the following equation must hold:

$$W= T'' = F( \ T' \ ) = F \ (F(T))$$

An additional option under play control (also shown in Figure 2) at this point is to apply to the video signal an analog video copy protection of the type available from Macrovision Corporation, such as automatic gain control and/or color stripe. This has the advantage that further VHS analog video copies are prevented (or at least are not usable) as well as the additional digital copies which are worked upon by equipment with watermark detectors.

The watermark described herein can be implemented in a number of different ways, depending on the capability of the associated watermarking system. For instance, if the watermarking system that is available is able to carry sufficient data on a single field, then a sufficiently large amount of data can be carried such that no time varying mechanisms need be applied. In some embodiments the watermarking system carries 8-bits per frame; however only 4 bits are available for hashing seed purposes since 4 bits were needed for other uses. For security reasons it is desirable to use a 64-bit seed and 64-bit tickets. Thus, these embodiments require a minimum of 16 frames with the actual number of frames dependent on the transport protocol employed based on the digital communication system design. Thus one embodiment requires typical communication protocols such as PPP which employ start and stop characteristics. Due to the nature of a video communication channel, it may be desirable to employ some form of forward error correction. Reed-Solomon encoding is one example of a forward error correction code that is commonly used for this purpose.

Some embodiments also employ 16-bits per field when carrying the ticket on line 21. Thus, both the ticket processing and watermark processing require buffers for storage such that decisions can be delayed and timed to occur when whole data values are available. Design of these types of buffers is apparent to those in the video and digital communications fields in light of this disclosure.

While the above disclosure is of a method using line 21 of analog video to carry the ticket between the STB and recorder to enable pay-to-record features, any combination of a watermark and consumer controllable information in an STB could be used. This approach is also not limited to any particular TV standard. In particular, other video lines could be used to hold the ticket as long as they have the desired characteristics of being transmitted to the STB in a manner such that they can be controlled by the consumer through the STB.

In addition, if the video is being transmitted over a digital interface, such as IEEE-1394 ("Firewire") or an ATSC (high definition TV) 8-VSB signal, from the STB to a device (recorder) which has storage capability then the ticket can still be controlled in the STB. In this case, the transmission or lack of transmission of the correct ticket is accomplished and the watermark/ticket combination still defines the copy-state. In these situations, the ticket could be transmitted using the MPEG User_data descriptor. In some cases, it may be desirable to not transmit any ticket at all, but in other cases, it may be desirable to transmit an incorrect ticket.

There are also other places in these video signals which could be used to transmit the ticket; however, the ticket is still controlled in the STB. The STB provides a way for ensuring that the content owner receives payment, whether that payment is for viewing only or for viewing and recording. Thus, it is the watermark and associated data under consumer control in the STB which are used in this method.

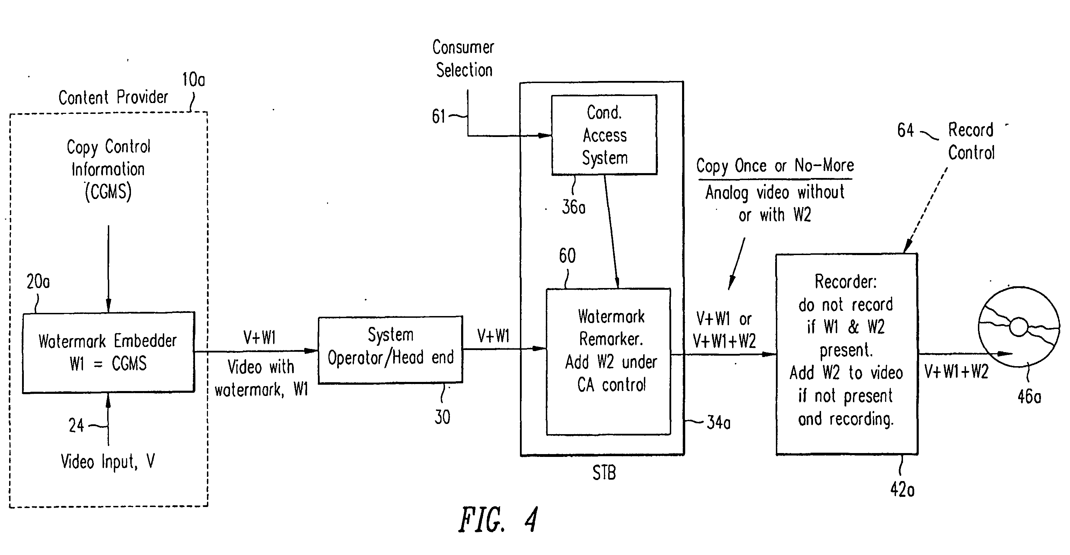

Figure 4 shows a system using a second watermark embedder located in the STB 34 as a watermark remarker 60. This is not a system of the present invention and does not use a ticket. In this method of creating video and record or view only video, a second watermark W2 is used. (Figure 4 shows elements identical to those used in Figure 1A, or similar, and thereby having reference numbers similar to those of Figure 1A with the letter "a" appended).

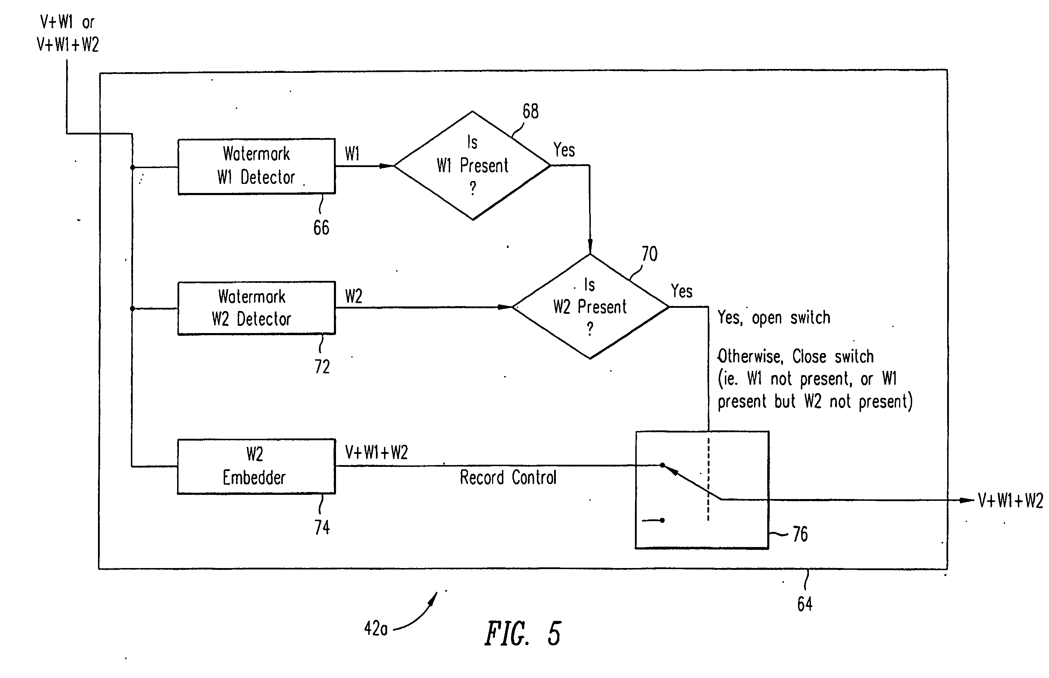

In the Figure 4 system, when the consumer selection 61 is to view (but not record), the analog video signal output from the STB 34a is No-More-Copy: V+W1+W2. When the consumer selection 61 is to view and record, the video signal output from the STB 34a is Copy-Once: V+W1. Under these circumstances, the record control portion 64 of the associated recorder 42a operates as shown in detail in Figure 5. (The remainder of recorder 429 is conventional).

A watermark W1 detector 66 first detects watermark W1. If no watermark W1 is found, then recording (copying) is allowed since it is assumed free-copying is available or the content has no copyright restrictions. If watermark W1 is detected at 68, then the watermark W2 detector 72 detects watermark W2. If W2 is not detected, then recording is allowed since this defines the one-copy-allowed state. The system "fails safe" in that recording is allowed. Note that W is typically some predetermined function of the active video. The fail safe provision is so that the user is not unnecessarily inconvenienced by false positive watermark detections. In general, watermarks are "woven into the fabric" of the video image. Removing them without degrading the base active video content is very difficult.

If W2 is detected along with W1 at 72, then no recording is allowed since this defines the no-more-copies state. This is accomplished by controlling switch 76, which in this case (yes from comparator 70) is set to be open. Otherwise (recording permitted) switch 76 is closed and video signal V+W1+W2 from W2 embedder 74 is output from switch 76 to be recorded by the remaining (not shown) conventional portions of recorder 42a. If the video signal input to the recorder 42a has W1 but no W2 and is recorded on the media 46a, then the watermark W2 is embedded in the video signal prior to recording on the media 46a.

Also, it should be recognized that in Figure 5, while separate detectors 66, 72 are shown for W1 and W2, these may in fact be implemented in the same functional hardware (or software) element with internal reconfiguration as to allow differentiation of W1 and W2. This implementation is readily achieved by one skilled in the art. Playback of media using this embodiment is simpler but it provides a lower level of security since no checking or detection of the watermarks is required. Also, in many cases a compliant recorder will be coupled to the player and will thereby prevent subsequent copies from being generated. A system without this coupling still has value since record control can still provide value even without the added value of play control.

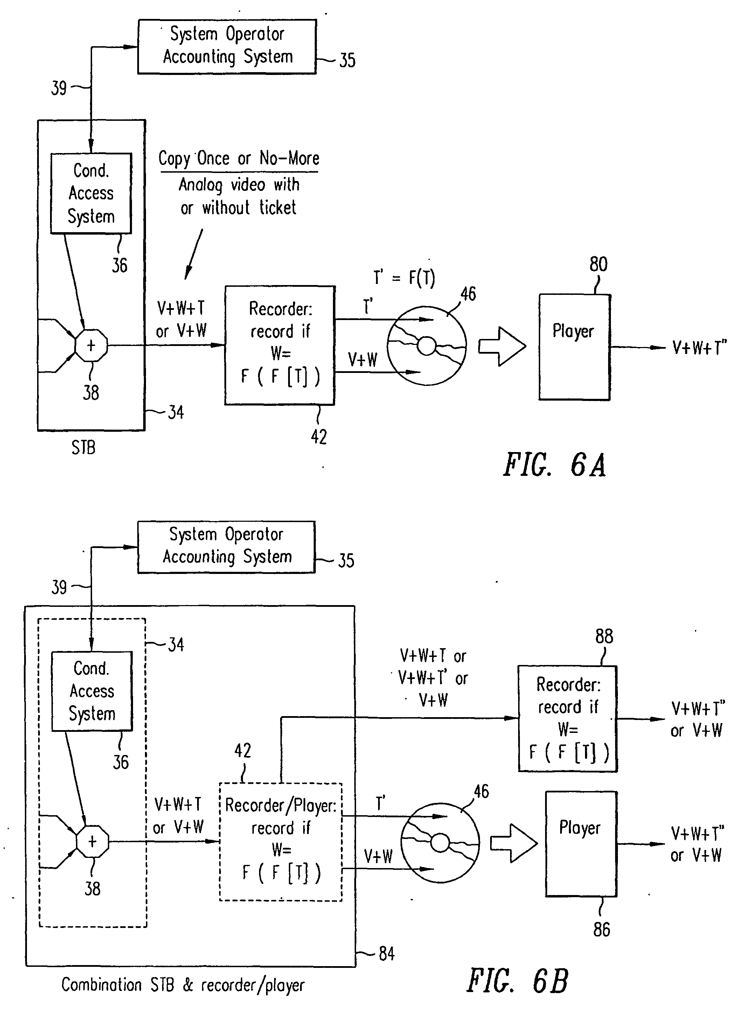

While the above described systems are disclosed in the context of separate devices for the set top box (STB) and the recorder, there is nothing to preclude the functionality of both these devices being integrated into a single apparatus. Figure 6A shows the system as described above using the same reference numbers, but also showing the compliant player 80, which outputs as shown when playing the media 46, the video with the watermark and the ticket (V+W+T").

Figure 6B shows a related system having the STB 34 combined with the recorder 42 in a single apparatus 84. As shown, the output signal stream from the recorder/player 42 may be applied to a recorder 88 if W=F(F(T)). Similarly, the media 46 may be played on player 86 outputting the video stream as shown, which is the video with the watermark and ticket (V+W+T") or merely the video with the watermark (V+W).

It is apparent that the systems of Figures 6A and 6B may be used in the above-described system employing the above-described first watermark and second watermark method for controlling recording.

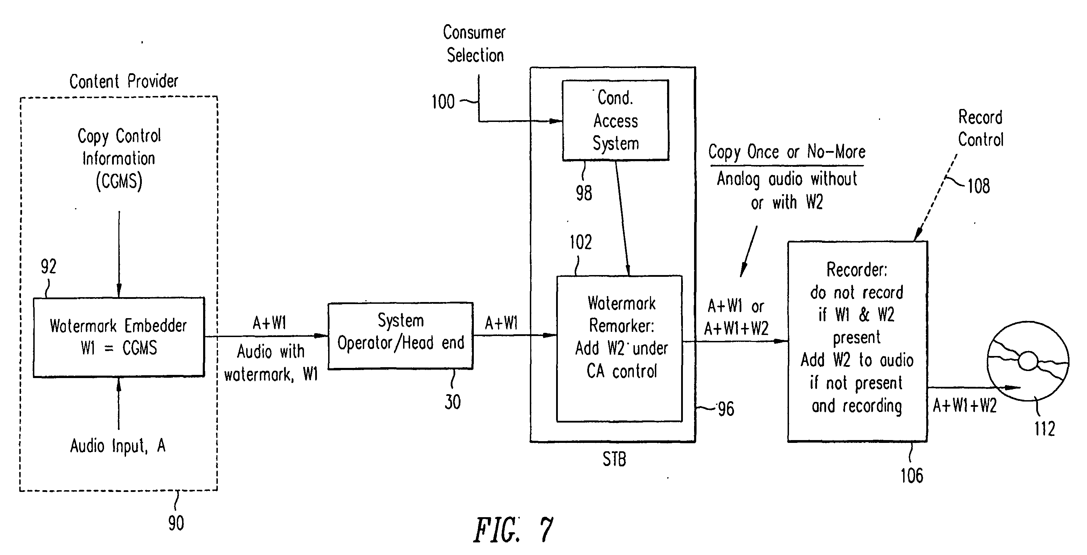

While the above disclosure is directed to video, a similar approach using the first watermark and second watermark may be applied to controlling recording of audio. Hence Figure 7 shows a system in many respects similar to that of Figure 4, however being adapted for providing enhanced audio distribution with the possibility of paying to record. The only structure labeled identically in Figure 7 to Figure 4 is the system operator headend 30. The other structures, although somewhat similar, have been redesignated to indicate that in this case they are adapted for audio purposes.

Hence the content provider 90, which is the source of the audio material, generates copy control information CGMS which is applied to the input terminal of a watermark embedder 92, to the other terminal of which is applied ordinary audio input signal A. The resulting output audio with watermark A+W1 is communicated, via conventional channels, to the system operator headend 30. From there, the audio signal A+W1 is sent over, for instance, the satellite or cable television distribution sytem to the STB 96. STB 96 includes a conditional access system 98 to which is applied a consumer selection on line 100.

The STB 96 also includes a watermark remarker 102 which adds watermark W2 under control of conditional access system 98. The watermark remarker 102 then outputs the watermarked audio stream in one of two forms. One form is the copy-once and the other is copy-no-more. In other words, the two forms are A+W1 or A+W1+W2, the analog audio A with or without watermark W2 but always including watermark W1. The associated compliant recorder 106 receives this analog audio signal, and under control of its record control 108, does not record if W1 and W2 are present and adds W2 to the audio if it is not present and recorder 106 is in the recording mode, thereby outputting audio stream A+W1+W2 to record on associated media 112.

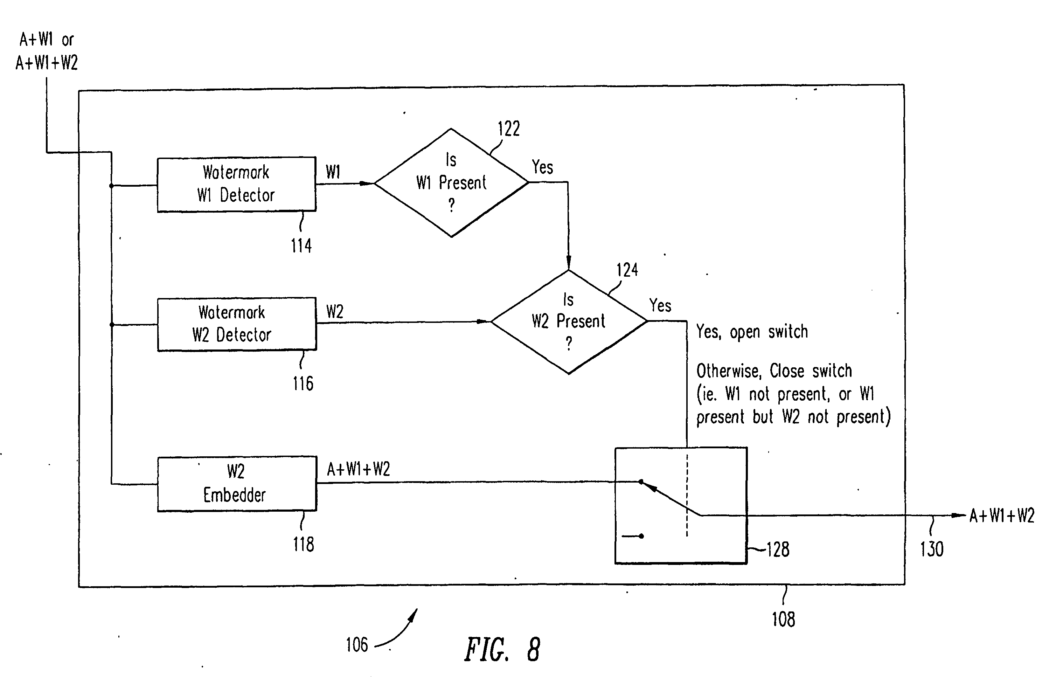

Figure 8 shows a block diagram of recorder 106 with further detail, showing how the record control portion 108 of audio recorder 106 includes a watermark W1 detector 114, a watermark W2 detector 116, and a watermark W2 embedder 118. The signal output from watermark W1 detector 114 is the indication of watermark W1 being present at 122. This is logically combined at 124 with the indication of whether watermark W2 is present. Only if both watermark are present is switch 128 opened, thereby preventing recording; otherwise switch 128 is closed thereby communicating the input audio with the added watermarks A+W1+W2 on the output terminal 130 of record control portion 108. It is to be understand that Figure 8 only shows the record control portion 108 of recorder 106, the remaining portions which are not illustrated being the conventional recording portions.

This disclosure is illustrative and not limiting; further modifications will be apparent to one skilled in the art and are intended to fall within the scope of the appended claims. For instance, the present system and method are readily applied to TV and video following various standards.

## Claims

1. A method of controlling copying of a video signal, comprising the steps of:

   embedding a watermark (W) in a supplied video signal (V); and
   providing associated data (T) in the video signal,

   wherein the associated data is related to the watermark in a predetermined manner,
   and wherein the associated data (T) is in the vertical blanking interval of the video signal,
   the method being **characterised in that** the associated data (T) is on a predetermined video line in the vertical blanking interval of the video signal, said predetermined video line being a line used to carry parental blocking data.

2. A method as claimed in Claim 1, wherein the associated data is a cryptographic value.

3. A method as claimed in Claim 2, wherein the cryptographic value is a hash function (F) of a seed (S), and the watermark is the hash function of the hash function of the hash function of the seed.

4. A method as claimed in any preceding claim, wherein said predetermined video line is a line also used to carry closed caption data.

5. A method as claimed in any preceding claim, wherein said predetermined video line, for NTSC-TV, is video line 21.

6. Apparatus for processing an input video signal to control subsequent copying thereof, the apparatus comprising:

   a seed generator (12);
   a hash function generator (16) coupled to receive a seed from the seed generator and to output resulting data;
   a watermark generator (20) coupled to receive the seed and to generate a watermark from the seed, and to embed the watermark in a picture portion of the input video signal; and
   a transmission channel coupled to transmit the output resulting data and the watermarked video to a receiver, the output resulting data being transmitted on a predetermined video line in the vertical blanking interval of the video signal, said predetermined video line being a line used to carry parental blocking data.

7. Apparatus as claimed in Claim 6, wherein the watermark is the hash function of the hash function of the hash function of the seed.

8. Apparatus as claimed in Claim 6 or Claim 7, wherein the predetermined video line is a line also used to carry closed caption data.

9. A method of controlling copying of a video signal (V) having an embedded watermark (W) and associated data (T), the associated data (T) being on a predetermined video line in the vertical blanking interval of the video signal, said predetermined video line being a line used to carry parental blocking data, the method comprising the steps of:

determining if recording of the video is to be permitted;
only if recording is permitted, transmitting the video signal (V) together with the associated data (T) to a recording device (42), and
enabling recording by the recording device (42) only if the embedded watermark (W) has a predetermined relationship to the associated data (T).

10. A method as claimed in Claim 9, wherein recording is enabled by the recording device (42) if the watermark (W) and the associated data (T) match.

11. A method as claimed in Claim 9 or Claim 10, wherein the associated data (T) is a cryptographic value.

12. A method as claimed in Claim 11, wherein the cryptographic value is a hash function (F) of a seed (S), and the watermark (W) is the hash function of the hash function of the hash function of the seed (S).

13. A method as claimed in any of Claims 9 to 12, further comprising the steps of:

upon determining that recording of the video is to be permitted, reporting to an accounting system (35) that recording is to be permitted; and causing the accounting system to charge a fee for permitting the recording.

14. A set top box (34) for connection to a television receiver, comprising:

an input terminal arranged to receive a video signal (V) including a watermark (W) and to receive associated data (T), wherein the associated data (T) is on a predetermined video line in the vertical blanking interval of the video signal (V), and said predetermined video line is a line used to carry parental blocking data,
conditional access control means (36), having a control terminal for receiving a user selection for enabling recording of the video signal; and a combiner (38) having a control terminal coupled to an output terminal of the conditional access control means (36) and receiving the video signal from the input terminal, and having an output terminal, wherein the combiner (38) outputs the video signal with the associated data where recording is permitted only if the associated data is related to the watermark in a predetermined manner.

15. A set top box as claimed in Claim 14, further comprising a connection to an uplink (39), and wherein the conditional access control means (36) transmits to the uplink an indication of said user selection.

16. A set top box as claimed in Claim 14 or Claim 15, wherein the associated data (T) is a cryptographic value.

17. A set top box as claimed in any of Claims 14 to 16, coupled to a video recorder (42) such that the video recorder receives the output video signal, and wherein the video recorder (42) comprises means to compare the embedded watermark (W) with the associated data (T) and to enable recording only if the watermark has the predetermined relationship to the associated data.

18. A set top box as claimed in any of Claims 14 to 17, wherein the predetermined video line is a line also used to carry closed caption data.

19. A method of operating a video recorder, comprising the steps of:

receiving an input video signal having an embedded watermark (W) and associated data (T), the associated data (T) being on a predetermined video line in the vertical blanking interval of the input video signal, and said predetermined video line being a line used to carry parental blocking data,
detecting the watermark;
detecting the associated data;
subjecting the associated data to a predetermined compression function; and
allowing recording of the input video signal only if the detected watermark matches the result of the compression function.

**20.** A method as claimed in Claim 19, wherein the compression function is a multiple hash function.

**21.** A method as claimed in Claim 19 or Claim 20, wherein the associated data is a cryptographic value.

**22.** A method as claimed in any of Claims 19 to 21, wherein the predetermined video line is a line also used to carry closed caption data.

**23.** A video recorder (42), comprising:

an interface to a recording medium;
an input port for receiving a video signal to be recorded on the medium;
a watermark detector (50) coupled to the input port to detect a watermark in said video signal;
a data detector (52) coupled to the input port to detect data on a predetermined video line in the vertical blanking interval of the video signal, said predetermined video line being a line used to carry parental blocking data; and
a processor (57) arranged to compare the detected watermark with the result of a compression function applied to said data, and to enable recording of the video signal onto the medium only if the comparison is a match.

**24.** A video recorder as claimed in Claim 23, wherein the compression function performs a hash function of a hash function of the data.

**25.** A video recorder as claimed in Claim 23 or Claim 24, wherein the data is a cryptographic value.

**26.** A video recorder as claimed in any of Claims 23 to 25, wherein the predetermined video line is a line also used to carry closed caption data.

**27.** A method of controlling the playing of a video signal recorded on a medium, comprising the steps of:

playing the video signal from the medium;
detecting a watermark (W) in the video signal;
detecting data (T) associated with the video signal, the data (T) being on a predetermined video line in the vertical blanking interval of the video signal, and said predetermined video line being a line used to carry parental blocking data;
subjecting the data to a compression function (F); and
allowing further playing of the video signal only if the watermark matches the compression function of the data.

**28.** A method as claimed in Claim 27, further comprising the step of applying an analog copy protection signal to the played video.

**29.** A method as claimed in Claim 27 or Claim 28, wherein the compression function is a hash function.

**30.** A method as claimed in any of Claims 27 to 29, wherein the data is a cryptographic value.

**31.** A method as claimed in any of Claims 27 to 30, wherein the predetermined video line is a line also used to carry closed caption data.

**32.** A video player (42) comprising:

an interface for receiving a video signal from a recording medium (46);
a watermark detector (50) arranged to receive the video signal;
a data detector (48, 54, 56) arranged to detect data associated with the video signal, wherein the associated data is on a predetermined video line in the vertical blanking interval of the video signal, and said predetermined video line is a line used to carry parental blocking data; and
a processor (57) coupled to the watermark detector (50) and the data detector and arranged to determine if there is a predetermined relationship between a detected watermark and the associated data to allow further playing only if there is said predetermined relationship.

**33.** A video player as claimed in Claim 32, further comprising means (54, 56) arranged to subject the detected data to a compression function, and wherein the processor (57) is arranged to compare the watermark with the result of the compression function and to allow playing only if the comparison is a match.

**34.** A video player as claimed in Claim 33, wherein the compression function is a hash function of a hash function.

**35.** A video player as claimed in any of Claims 32 to 34, wherein the data is a cryptographic value.

**36.** A video player as claimed in any of Claims 32 to 35, wherein the predetermined video line is a line also used to carry closed caption data.

**Patentansprüche**

**1.** Verfahren zum Kontrollieren des Kopierens eines Videosignals mit den Schritten:

Einbetten eines Wasserzeichens (W) in ein zugeführtes Videosignal (V), und

Bereitstellen zugehöriger Daten (T) in dem Videosignal,

wobei die zugehörigen Daten in vorgegebener Weise in Beziehung zu dem Wasserzeichen stehen, und wobei die zugehörigen Daten (T) in der vertikalen Austastlücke des Videosignals sind, wobei das Verfahren **dadurch gekennzeichnet ist, dass** die zugehörigen Daten (T) sich auf einer vorgegebenen Videozeile in der vertikalen Austastlücke des Videosignals befinden, wobei die vorgegebene Videozeile eine Zeile ist, die dazu verwendet wird, um elterliche Sperrdaten zu übertragen.

2. Verfahren nach Anspruch 1, wobei die zugehörigen Daten ein kryptographischer Wert sind.

3. Verfahren nach Anspruch 2, wobei der kryptographische Wert eine Hash-Funktion (F) eines Ausgangswertes (S) ist und das Wasserzeichen die Hash-Funktion der Hash-Funktion der Hash-Funktion des Ausgangswertes ist.

4. Verfahren nach einem der vorhergehenden Ansprüche, wobei die vorgegebene Videozeile eine Videozeile ist, die dazu verwendet wird, um Untertitel zu übertragen.

5. Verfahren nach einem der vorhergehenden Ansprüche, wobei die vorgegebene Videozeile für NTSC-TV die Videozeile 21 ist.

6. Vorrichtung zum Prozessieren eines eingegebenen Videosignals, um dessen späteres Kopieren zu kontrollieren, wobei die Vorrichtung aufweist:

einen Ausgangswert-Generator (12),

einen Hash-Funktions-Generator (16), der zum Empfang eines Ausgangswertes von dem Ausgangswert-Generator und zur Ausgabe resultierender Daten verbunden,

einen Wasserzeichen-Generator (20), der zum Empfang des Ausgangswertes und zur Erzeugung eines Wasserzeichens aus dem Ausgangswert und zum Einbetten des Wasserzeichens in einen Bildbereich des eingegebenen Videosignals verbunden ist, und

einen Übertragungskanal, der zum Senden der resultierenden Ausgangsdaten und des mit Wasserzeichen versehenen Videos zu einem Empfänger verbunden ist, wobei die resultierenden Ausgangsdaten auf einer vorgegebenen Videozeile in der vertikalen Austastlücke des Videosignals übertragen werden, wobei die vorgegebene Videozeile eine Zeile ist, die dazu verwendet wird, um elterliche Sperrdaten zu übertragen.

7. Vorrichtung nach Anspruch 6, wobei das Wasserzeichen die Hash-Funktion der Hash-Funktion der Hash-Funktion des Ausgangswertes ist.

8. Vorrichtung nach Anspruch 6 oder Anspruch 7, wobei die vorgegebene Videozeile eine Zeile ist, die dazu verwendet wird, um Untertitel zu übertragen.

9. Verfahren zum Kontrollieren des Kopierens eines Videosignals (V), das ein darin eingebettetes Wasserzeichen (W) und zugehörige Daten (T) hat, wobei die zugehörigen Daten (T) sich in einer vorgegebenen Videozeile in der vertikalen Austastlücke des Videosignals befinden, wobei die vorgegebene Videozeile eine Zeile ist, die dazu verwendet wird, um elterliche Sperrdaten zu tragen, wobei bei dem Verfahren:

festgestellt wird, ob das Aufzeichnen des Videos erlaubt werden soll,

nur wenn das Aufzeichnen gestattet ist, das Videosignal (V) zusammen mit den zugehörigen Daten (T) zu einer Aufzeichnungseinrichtung (42) übertragen wird, und

das Aufzeichnen mit der Zeichnungseinrichtung (42) nur zugelassen wird, wenn das eingebettete Wasserzeichen (W) eine vorgegebene Beziehung mit den zugehörigen Daten (T) hat.

10. Verfahren nach Anspruch 9, wobei das Aufzeichnen mit der Zeichnungseinrichtung (42) zugelassen wird, wenn das Wasserzeichen (W) und die zugehörigen Daten (T) zueinander passen.

11. Verfahren nach Anspruch 9 oder 10, wobei die zugehörigen Daten (T) ein kryptographischer Wert sind.

12. Verfahren nach Anspruch 11, wobei der kryptographische Wert eine Hash-Funktion (F) eines Ausgangswertes (S) ist und das Wasserzeichen (W) die Hash-Funktion der Hash-Funktion der Hash-Funktion des Ausgangswertes (S) ist.

13. Verfahren nach einem der Ansprüche 9 bis 12, bei dem weiter:

auf die Feststellung hin, dass die Aufzeichnung des Videos erlaubt werden soll, ein Abrechnungssystem (35) unterrichtet wird, dass das Aufzeichnen erlaubt werden soll, und

das Abrechnungssystem veranlasst wird, eine Gebühr zu erheben, um das Aufzeichnen zu erlauben.

14. Set-Top-Box (34) zum Verbinden mit einem Fernsehempfänger, mit:

einem Eingangsanschluss, der dazu ausgestaltet ist, ein Videosignal (V) einschließlich eines Wasserzeichens (W) zu empfangen und zugehörige Daten (T) zu empfangen, wobei die zugehörigen Daten (T) sich auf einer vorgegebenen Videozeile in der vertikalen Austastlücke des Videosignals (V) befinden und wobei die vorgegebene Videozeile eine Zeile ist, die dazu verwendet wird, um elterliche Sperrdaten zu übertragen,

einer Einrichtung zur Kontrolle des bedingten Zugriffs (36) mit einem Kontrollanschluss zum Empfang einer Benutzerauswahl zum Zulassen der Aufzeichnung des Videosignals, und

einem Kombinierer (38) mit einem Kontrollanschluss, der an einen Ausgangsanschluss der Einrichtung zur Kontrolle des bedingten Zugriffs (36) angeschlossen ist, und der das Videosignal von dem Eingangsanschluss empfängt und einen Ausgangsanschluss aufweist, wobei der Kombinierer (38) das Videosignal mit den zugehörigen Daten ausgibt, wobei das Aufzeichnen nur erlaubt ist, wenn die zugehörigen Daten in einer vorgegebenen Weise mit dem Wasserzeichen in Beziehung stehen.

15. Set-Top-Box nach Anspruch 14, die weiter eine Verbindung zu einer Aufwärtsverbindung (39) aufweist, und wobei die Einrichtung zur Kontrolle des bedingten Zugriffs (36) zu der Aufwärtsverbindung ein Anzeichen der Benutzerauswahl überträgt.

16. Set-Top-Box nach Anspruch 14 oder 15, wobei die zugehörigen Daten (T) ein kryptographischer Wert sind.

17. Set-Top-Box nach einem der Ansprüche 14 bis 16, die mit einem Videorekorder (42) so verbunden ist, dass der Videorekorder das Ausgangssignal empfängt, und wobei der Videorekorder (42) eine Einrichtung zum Vergleichen des eingebetteten Wasserzeichens (W) mit den zugehörigen Daten (T) und zum Zulassen der Aufzeichnung nur dann, wenn das Wasserzeichen die vorgegebene Beziehung zu den zugehörigen Daten hat, aufweist.

18. Set-Top-Box nach einem der Ansprüche 14 bis 17, wobei die vorgegebene Videozeile eine Zeile ist, die auch dazu verwendet wird, um Untertiteldaten zu übertragen.

19. Verfahren zum Betreiben eines Videorekorders, bei dem:

ein Eingangsvideosignal mit eingebettetem Wasserzeichen (W) und zugehörigen Daten (T) empfangen wird, wobei sich die zugehörigen Daten (T) auf einer vorgegebenen Videozeile in der vertikalen Austastlücke des Eingangsvideosignals befinden und wobei die vorgegebene Videozeile eine Zeile ist, die dazu verwendet wird, um elterliche Sperrdaten zu tragen,

das Wasserzeichen detektiert wird,

die zugehörigen Daten detektiert werden,

die zugehörigen Daten einer vorgegebenen Kompressionsfunktion unterzogen werden, und

die Aufzeichnung des Eingangsvideosignals nur zugelassen wird, wenn das detektierte Wasserzeichen zu dem Ergebnis der Kompressionsfunktion passt.

20. Verfahren nach Anspruch 19, wobei die Kompressionsfunktion eine mehrfache Hash-Funktion ist.

21. Verfahren nach Anspruch 19 oder 20, wobei die zugehörigen Daten ein kryptographischer Wert sind.

22. Verfahren nach einem der Ansprüche 19 bis 21, wobei die vorgegebene Videozeile eine Zeile ist, die auch dazu verwendet wird, um Untertiteldaten zu tragen.

23. Videorekorder (42) mit:

einer Schnittstelle zu einem Aufzeichnungsmedium,

einem Eingangsanschluss zum Empfangen eines Videosignals, das auf dem Medium aufgezeichnet werden soll,

einem Wasserzeichen-Detektor (50), der mit dem Eingangsanschluss verbunden ist, um ein Wasserzeichen in dem Videosignal zu detektieren,

einem Daten-Detektor (52), der mit dem Eingangsanschluss verbunden ist, um Daten auf einer vorgegebenen Videozeile in der vertikalen Austastlücke des Videosignals zu detektieren, wobei die vorgegebene Videozeile eine Zeile ist, die dazu verwendet wird, um elterliche Sperrdaten zu tragen, und

einem Prozessor (57), der dazu ausgelegt ist, um das detektierte Wasserzeichen mit dem Ergebnis einer Kompressionsfunktion, die auf die Daten angewendet worden ist, zu vergleichen und um die Aufzeichnung des Videosignals auf das Medium nur zuzulassen, wenn der Vergleich eine Übereinstimmung ist.

24. Videorekorder nach Anspruch 23, wobei die Kompressionsfunktion eine Hash-Funktion einer Hash-Funktion der Daten ausführt.

25. Videorekorder nach Anspruch 23 oder Anspruch 24, wobei die Daten ein kryptographischer Wert sind.

26. Videorekorder nach einem der Ansprüche 23 bis 25, wobei die vorgegebene Videozeile eine Zeile ist, die auch dazu verwendet wird, um Untertiteldaten zu übertragen.

27. Verfahren zum Kontrollieren des Abspielens eines Videosignals, das auf einem Medium aufgezeichnet ist, bei dem:

das Videosignal von dem Medium abgespielt wird,

ein Wasserzeichen (W) in dem Videosignal detektiert wird,

zu dem Videosignal gehörige Daten (T) detektiert werden, wobei die Daten (T) sich auf eine vorgegebene Videozeile in der vertikalen Austastlücke des Videosignals befinden, und wobei die vorgegebene Videozeile eine Zeile ist, die dazu verwendet wird, um elterliche Sperrdaten zu tragen,

die Daten einer Kompressionsfunktion (F) unterzogen werden, und

das weitere Abspielen des Videosignals nur zugelassen wird, wenn das Wasserzeichen zu der Kompressionsfunktion der Daten passt.

28. Verfahren nach Anspruch 27, bei dem weiter ein analoges Kopieschutzsignal auf das abgespielte Video angewendet wird.

29. Verfahren nach Anspruch 27 oder Anspruch 28, wobei die Kompressionsfunktion eine Hash-Funktion ist,

30. Verfahren nach einem der Ansprüche 27 bis 29, wobei die Daten ein kryptographischer Wert sind.

31. Verfahren nach einem der Ansprüche 27 bis 30, wobei die vorgegebene Video zeile eine Zeile ist, die auch dazu verwendet wird, um Untertiteldaten zu übertragen.

32. Video-Abspielgerät (42) mit:

einer Schnittstelle zum Empfangen eines Videosignals von einem Aufzeichnungsmedium (46),

einem Wasserzeichen-Detektor (50), der dazu ausgelegt ist, das Videsignal zu empfangen,

einem Daten-Detektor (48, 54, 56), der dazu ausgelegt ist, die zu dem Videosignal gehörigen Daten zu detektieren, wobei die zugehörigen Daten sich auf einer vorgegebenen Videozeile in der vertikalen Austastlücke des Videosignals befinden und wobei die vorgegebene Videozeile eine Zeile ist, die dazu verwendet wird, um elterliche Sperrdaten zu tragen.

einem Prozessor (57), der mit dem Wasserzeichen-Detektor (50) und dem Daten-Detektor verbunden ist und dazu vorbereitet ist festzustellen, ob es eine vorgegebene Beziehung zwischen einem detektierten Wasserzeichen und den zugehörigen Daten gibt, um weiteres Abspielen nur zu erlauben, wenn diese vorgegebene Beziehung vorhanden ist.

33. Video-Abspielgerät nach Anspruch 32, weiter mit Mitteln (54, 56), die dazu ausgelegt sind, die detektierten Daten einer Kompressionsfunktion zu unterziehen, wobei der Prozessor (57) dazu vorbereitet ist, das Wasserzeichen mit dem Ergebnis der Kompressionsfunktion zu vergleichen und das Abspielen nur zu erlauben, wenn der Vergleich eine Übereinstimmung ergibt.

34. Video-Abspielgerät nach Anspruch 33, wobei die Kompressionsfunktion eine Hash-Funktion einer Hash-Funktion ist.

35. Video-Abspielgerät nach einem der Ansprüche 32 bis 34, wobei die Daten ein kryptographischer Wert sind.

36. Video-Abspielgerät nach einem der Ansprüche 32 bis 35, wobei die vorgegebene Videozeile eine Zeile ist, die auch dazu verwendet wird, um Untertiteldaten zu übertragen.

**Revendications**

1. Procédé pour maîtriser une opération de copie d'un signal vidéo, comprenant les étapes suivantes :

   on incorpore un filigrane (W) dans un signal vidéo (V) fourni; et
   on introduit des données associées (T) dans le signal vidéo,

   dans lequel les données associées sont liées au filigrane d'une manière prédéterminée,
   et dans lequel les données associées (T) sont dans l'intervalle d'effacement vertical du signal vidéo,
   le procédé étant **caractérisé en ce que** les données associées (T) sont sur une ligne vidéo prédéterminée dans l'intervalle d'effacement vertical du signal vidéo, cette ligne vidéo prédéterminée étant une ligne utilisée pour transporter des données de verrouillage parental.

2. Procédé selon la revendication 1, dans lequel les données associées sont une valeur cryptographique.

3. Procédé selon la revendication 2, dans lequel la valeur cryptographique est une fonction de hachage (F) d'un germe (S), et le filigrane est la fonction de hachage de la fonction de hachage de la fonction de hachage du germe.

4. Procédé selon l'une quelconque des revendications précédentes, dans lequel la ligne vidéo prédéterminée est une ligne qui est également utilisée pour acheminer des données de sous-titrage.

5. Procédé selon l'une quelconque des revendications précédentes, dans lequel la ligne vidéo prédéterminée, pour le système de télévision NTSC, est la ligne vidéo 21.

6. Appareil pour traiter un signal vidéo d'entrée pour maîtriser une opération de copie ultérieure de celui-ci, l'appareil comprenant :

   un générateur de germe (12);
   un générateur de fonction de hachage (16) couplé pour recevoir un germe à partir du générateur de germe et pour émettre des données résultantes;
   un générateur de filigrane (20) couplé pour recevoir le germe et pour générer un filigrane à partir du germe, et pour incorporer le filigrane dans une partie d'image du signal vidéo d'entrée; et
   un canal de transmission couplé pour transmettre à un récepteur les données résultantes émises et l'information vidéo marquée avec le filigrane, les données résultantes émises étant transmises sur une ligne vidéo prédéterminé dans l'intervalle d'effacement vertical du signal vidéo, et la ligne vidéo prédéterminée étant une ligne utilisée pour transporter des données de verrouillage parental.

7. Appareil selon la revendication 6, dans lequel le filigrane est la fonction de hachage de la fonction de hachage de la fonction de hachage du germe.

8. Appareil selon la revendication 6 ou la revendication 7, dans lequel la ligne vidéo prédéterminée est une ligne qui est également utilisée pour transporter des données de sous-titrage.

9. Procédé pour maîtriser une opération de copie d'un signal vidéo (V) ayant un filigrane (W) incorporé et des données associées (T), les données associées (T) étant sur une ligne vidéo prédéterminée dans l'intervalle d'effacement vertical du signal vidéo, cette ligne vidéo prédéterminée étant une ligne utilisée pour transporter des données de verrouillage parental, le procédé comprenant les étapes suivantes :

   on détermine si l'enregistrement de l'information vidéo doit être permis;
   seulement si l'enregistrement est permis, on émet le signal vidéo (V) conjointement aux données associées (T) vers un dispositif d'enregistrement (42), et
   on autorise l'enregistrement par le dispositif d'enregistrement (42) seulement si le filigrane (W) incorporé a une relation prédéterminée avec les données associées (T).

10. Procédé selon la revendication 9, dans lequel l'enregistrement est autorisé par le dispositif d'enregistrement (42) si le filigrane (W) et les données associées (T) concordent.

11. Procédé selon la revendication 9 ou la revendication 10, dans lequel les données associées (T) sont une valeur cryptographique.

12. Procédé selon la revendication 11, dans lequel la valeur cryptographique est une fonction de hachage (F) d'un germe (S), et le filigrane (W) est la fonction de hachage de la fonction de hachage de la fonction de hachage du germe (S).

13. Procédé selon l'une quelconque des revendications 9 à 12, comprenant en outre les étapes suivantes :

   sous l'effet de la détermination du fait que l'enregistrement de l'information vidéo doit être permis, on signale à un système de comptabilité (35) que l'enregistrement doit être permis; et

on fait en sorte que le système de comptabilité impute une taxe pour permettre l'enregistrement.

14. Boîtier décodeur (34) destiné à être connecté à un récepteur de télévision, comprenant :

une borne d'entrée adaptée pour recevoir un signal vidéo (V) incluant un filigrane (W) et pour recevoir des données associées (T), dans lequel les données associées (T) sont sur une ligne vidéo prédéterminée dans l'intervalle d'effacement vertical du signal vidéo (V), et cette ligne vidéo prédéterminée est une ligne utilisée pour transporter des données de verrouillage parental,

un moyen de commande d'accès conditionnel (36), ayant une borne de commande pour recevoir une sélection d'utilisateur pour autoriser l'enregistrement du signal vidéo; et

un dispositif de combinaison (38) ayant une borne de commande couplée à une borne de sortie du moyen de commande d'accès conditionnel (36) et recevant le signal vidéo provenant de la borne d'entrée, et ayant une borne de sortie, dans lequel le dispositif de combinaison (38) émet le signal vidéo avec les données associées, l'enregistrement étant permis seulement si les données associées sont liées au filigrane d'une manière prédéterminée.

15. Boîtier décodeur selon la revendication 14, comprenant en outre une connexion à une liaison montante (39), et dans lequel le moyen de commande d'accès conditionnel (36) émet sur la liaison montante une indication de la sélection d'utilisateur.

16. Boîtier décodeur selon la revendication 14 ou la revendication 15, dans lequel les données associées (T) sont une valeur cryptographique.

17. Boîtier décodeur selon l'une quelconque des revendications 14 à 16, couplé à un enregistreur vidéo (42) de façon que l'enregistreur vidéo reçoive le signal vidéo de sortie, et dans lequel l'enregistreur vidéo (42) comprend un moyen pour comparer le filigrane (W) incorporé avec les données associées (T) et pour autoriser l'enregistrement seulement si le filigrane a la relation prédéterminée avec les données associées.

18. Boîtier décodeur selon l'une quelconque des revendications 14 à 17, dans lequel la ligne vidéo prédéterminée est une ligne qui est également utilisée pour transporter des données de sous-titrage.

19. Procédé d'exploitation d'un enregistreur vidéo, comprenant les étapes suivantes :

on reçoit un signal vidéo d'entrée ayant un filigrane (W) incorporé et des données associées (T), les données associées (T) étant sur une ligne vidéo prédéterminée dans l'intervalle d'effacement vertical du signal vidéo d'entrée, et cette ligne vidéo prédéterminée étant une ligne utilisée pour transporter des données de verrouillage parental,
on détecte le filigrane;
on détecte les données associées;
on soumet les données associées à une fonction de compression prédéterminée; et
on permet l'enregistrement du signal vidéo d'entrée seulement si le filigrane détecté concorde avec le résultat de la fonction de compression.

20. Procédé selon la revendication 19, dans lequel la fonction de compression est une fonction de hachage multiple.

21. Procédé selon la revendication 19 ou la revendication 20, dans lequel les données associées sont une valeur cryptographique.

22. Procédé selon l'une quelconque des revendications 19 à 21, dans lequel la ligne vidéo prédéterminée est une ligne qui est également utilisée pour transporter des données de sous-titrage.

23. Enregistreur vidéo (42), comprenant :

une interface avec un support d'enregistrement;
un port d'entrée pour recevoir un signal vidéo à enregistrer sur le support;
un détecteur de filigrane (50) couplé au port d'entrée pour détecter un filigrane dans le signal vidéo;
un détecteur de données (52) couplé au port d'entrée pour détecter des données sur une ligne vidéo prédéterminée dans l'intervalle d'effacement vertical du signal vidéo, cette ligne vidéo prédéterminée étant une ligne utilisée pour transporter des données de verrouillage parental; et

un processeur (57) conçu pour comparer le filigrane détecté avec le résultat d'une fonction de compression appliquée aux données, et pour autoriser l'enregistrement du signal vidéo sur le support seulement si la comparaison indique une concordance.

24. Enregistreur vidéo selon la revendication 23, dans lequel la fonction de compression exécute une fonction de hachage d'une fonction de hachage des données.

25. Enregistreur vidéo selon la revendication 23 ou 24, dans lequel les données sont une valeur cryptographique.

26. Enregistreur vidéo selon l'une quelconque des revendications 23 à 25, dans lequel la ligne vidéo prédéterminée est une ligne également utilisée pour transporter des données de sous-titrage.

27. Procédé pour maîtriser la reproduction d'un signal vidéo enregistré sur un support, comprenant les étapes suivantes :

on reproduit le signal vidéo à partir du support;
on détecte un filigrane (W) dans le signal vidéo;
on détecte des données (T) associées au signal vidéo, les données (T) étant sur une ligne vidéo prédéterminée dans l'intervalle d'effacement vertical du signal vidéo, et cette ligne vidéo prédéterminée étant une ligne utilisée pour transporter des données de verrouillage parental;
on soumet les données à une fonction de compression (F); et
on permet une reproduction ultérieure du signal vidéo seulement si le filigrane concorde avec la fonction de compression des données.

28. Procédé selon la revendication 27, comprenant en outre l'étape consistant à appliquer à la vidéo reproduite un signal de protection contre la copie analogique.

29. Procédé selon la revendication 27 ou 28, dans lequel la fonction de compression est une fonction de hachage.

30. Procédé selon l'une quelconque des revendications 27 à 29, dans lequel les données sont une valeur cryptographique.

31. Procédé selon l'une quelconque des revendications 27 à 30, dans lequel la ligne vidéo prédéterminée est une ligne qui est également utilisée pour transporter des données de sous-titrage.

32. Lecteur vidéo (42) comprenant :

une interface pour recevoir un signal vidéo provenant d'un support d'enregistrement (46);
un détecteur de filigrane (50) conçu pour recevoir le signal vidéo;
un détecteur de données (48, 54, 56) conçu pour détecter des données associées au signal vidéo, dans lequel les données associées sont sur une ligne vidéo prédéterminée dans l'intervalle d'effacement vertical du signal vidéo, et cette ligne vidéo prédéterminée est une ligne utilisée pour transporter des données de verrouillage parental; et
un processeur (57) couplé au détecteur de filigrane (50) et au détecteur de données et conçu pour déterminer s'il y a une relation prédéterminée entre un filigrane détecté et les données associées, pour permettre une reproduction ultérieure seulement si cette relation prédéterminée existe.

33. Lecteur vidéo selon la revendication 32, comprenant en outre un moyen (54, 56) conçu pour soumettre les données détectées à une fonction de compression, et dans lequel le processeur (57) est conçu pour comparer le filigrane avec le résultat de la fonction de compression et pour autoriser la reproduction seulement si la comparaison indique une concordance.

34. Lecteur vidéo selon la revendication 33, dans lequel la fonction de compression est une fonction de hachage d'une fonction de hachage.

35. Lecteur vidéo selon l'une quelconque des revendications 32 à 34, dans lequel les données sont une valeur cryptographique.

36. Lecteur vidéo selon l'une quelconque des revendications 32 à 35, dans lequel la ligne vidéo prédéterminée est une ligne qui est également utilisée pour transporter des données de sous-titrage.

FIG. 1A

FIG. 1B

FIG. 2

EP 1 155 569 B1

System Operator Accounting System — 35

39

Content Provider 10

Consumer Selection

Seed Generator

12

S

$T = F(S)$

16

Line 21 of video

T

Closed caption data in MPEG

Cond. Access System

36

T

Copy Once or No-More
Analog video with or without ticket

Record Control

$T' = F(T)$

20

$W = F[F(F[S])]$

V+W

System Operator/Head end

V+W

30

T

V+W

+

38

V+W+T or V+W

Recorder: record if $W = F(F[T])$

42

T'

V+W

46

24

Video Input, V

Video with watermark, W

27

34

STB

## FIG. 1C

FIG. 1D

Content Provider 10

Seed Generator 12

$T = F(S)$

$W = F[F(F[S])]$ 20

24 — Video Input, V

Line 21 of video

T

V+W

Video with watermark, W 27

System Operator/Head end 30

Closed caption data in MPEG

T

V+W

Consumer Selection

Cond. Access System 36

System Operator Accounting System 35

39

STB 34a

38

41

Copy Once or No-More / Analog video with or without ticket

V+W+T or V+W

Record Control

Recorder: record if $W = F(F[T])$ 42

$T' = F(T)$

T'

V+W

46

EP 1 155 569 B1

EP 1 155 569 B1

V+W+T

T'

| Ticket/Line21 Extractor | T | One way hash function, F | | One way hash function, F |
48 54 56

Watermark Detector W
50

WM = F (F [T]) ? 57

Yes, shut switch
No, open switch

Ticket/Line21 Deletor | V+W
52

Record Control

V+W

58

42

43

FIG. 3

*FIG. 4*

FIG. 5

V+W1 or
V+W1+W2

Watermark
W1 Detector
66

W1

68
Is
W1 Present
?

Yes

70
Is
W2 Present
?

Yes

Watermark
W2 Detector
72

W2

Yes, open switch

Otherwise, Close switch
(ie. W1 not present, or W1
present but W2 not present)

W2
Embedder
74

V+W1+W2

Record Control

76

V+W1+W2

42a

64

EP 1 155 569 B1

System Operator
Accounting System — 35

39

Cond.
Access
System

Copy Once or No-More
Analog video with
or without ticket

36

T' = F(T)
T'

46

80

Player

V+W+T
or V+W

Recorder:
record if
W=
F ( F [T] )

V+W

V+W+T"

38

42

34

STB

*FIG. 6A*

System Operator
Accounting System — 35

39

34

Cond.
Access
System

36

42

V+W+T or
V+W+T' or
V+W

88

Recorder:
record if
W=
F ( F [T] )

V+W+T"
or V+W

V+W+T
or V+W

Recorder/Player:
record if
W=
F ( F [T] )

T'

46

V+W

Player

V+W+T"
or V+W

38

84

86

Combination STB & recorder/player

*FIG. 6B*

EP 1 155 569 B1

Content Provider

Consumer Selection

Copy Control Information (CGMS)

100

Cond. Access System

98

Record Control

108

92

102

Watermark Embedder W1 = CGMS

A+W1

Audio with watermark, W1

System Operator/Head end

A+W1

Watermark Remarker: Add W2 under CA control

96

Copy Once or No-More
Analog audio without or with W2

A+W1 or A+W1+W2

Recorder: do not record if W1 & W2 present Add W2 to audio if not present and recording

A+W1+W2

112

106

Audio Input, A

30

STB

90

FIG. 7

FIG. 8